# EUROPÄISCHE PATENTANMELDUNG

(11) **EP 1 120 725 A1**
(43) Veröffentlichungstag der Anmeldung: **01.08.2001**
(21) Anmeldenummer: 00101351.5
(22) Anmeldetag: 24.01.2000
(51) Int. Cl.: G06F 17/60

(54) **Verfahren zur automatisierten Abwicklung von Zuordnungsvorgängen in bezug auf Waren- und/oder Dienstleistungsangebote**

(71) Anmelder: SCHEIDT & BACHMANN GMBH, D-41238 Mönchengladbach (DE)
(72) Erfinder: Dr. Miller, Norbert, 41063 Mönchengladbach (DE)
(74) Vertreter: Stenger, Watzke & Ring Patentanwälte

(57) **Zusammenfassung**

Der vorliegenden Erfindung liegt die Aufgabe zugrunde, ein Verfahren bereitzustellen welches auf viele verschiedene Anwendungsbereiche einfach anpaßbar, automatisch und insbesondere nutzerseitig denkbar vereinfacht durchführbar ist. Erfindungsgemäß werden auch Vorrichtungen für den Einsatz im erfindungsgemäßen Verfahren angegeben. Zur Lösung wird mit der vorliegenden Erfindung vorgeschlagen ein Verfahren zur automatisierten Abwicklung von Verfügbarkeitsprüfungs-, Reservierungs- und Zuordnungsvorgängen in bezug auf örtlich festgelegte Waren- und/oder Dienstleistungsangebote, wobei unter Verwendung einer überregionalen Kommunikationsverbindung vor dem Hintergrund eines nutzerseitigen Bedarfs
a) eine nutzerseitige Festlegung auf ein anbieterseitiges Angebot erfolgt,
b) anbieterseitig dem Angebot eine berechtigende Kennung zugeordnet, an den Nutzer übertragen und in einer nutzerseitigen Speichereinheit gespeichert wird,
c) anbieterseitig eine Reservierung unter Speicherung der Kennung und Bereitstellung der Reservierungs- und Kennungsinformationen an ein Kennungsprüfungssystem durchgeführt werden,
   und wobei unter Nutzung einer Nahbereichs-Kommunikationsverbindung
d) bei Eintritt des Nutzers in den Nahbereich des Kennungsprüfungssystems eine berührungslose Kennungsüberprüfung und
e) bei positivem Kennungsüberprüfungsergebnis eine Zugangsfreigabe für den Nutzer erfolgen.

## Beschreibung

Die vorliegende Erfindung betrifft ein Verfahren zur automatisierten Abwicklung von Verfügbarkeitsprüfungs-, Reservierungs- und Zuordnungsvorgängen in bezug auf örtlich festgelegte Waren- und/oder Dienstleistungsangebote.

Im Bereich von Dienstleistungsangeboten sind bereits umfangreiche Automatisierungsbestrebungen bekannt und im Gange. Vor allem für Dienstleistungsangebote, die für beliebige Nutzergruppen zu deren Verfügung vorgehalten werden, sollen die Einräumungen von Nutzungsberechtigungen denkbar vereinfacht und automatisiert werden. So sind beispielsweise halbautomatische Nutzungsberechtigungssysteme im Bereich der Ausgabe von Flugtickets, Bahnkarten, der Verwendung von Parkhäusern und Freizeitanlagen und dgl. bekannt. Aber auch im Bereich der Warenausgabe sind Vereinfachungsbemühungen im Gange, beispielsweise eingeleitet durch sogenannte Drive-In's und dergleichen.

Bekannte Systeme kommen allerdings in letzter Konsequenz nicht ohne den Austausch oder die Übermittlung von Belegen, beispielsweise gedruckten Berechtigungsscheinen und dgl. aus. Dies liegt in erster Linie daran, daß keine eindeutigen individualisierbaren Nutzeridentifikationen möglich sind. In halbautomatischen Systemen, beispielsweise der Ausgabe von Flugtickets, wird auf vom Anbieter herausgegebene Sonderkarten, im allgemeinsten Fall auf Kreditkartennummern Bezug genommen, so daß die Vorlage dieser Sonderberechtigungskarten oder Kreditkarten oder das Einfügen in Automaten zum Ausdrucken eines Tickets führt. Alle bekannten Sondersysteme sind weitestgehend inkompatibel und unwirtschaftlich, da sie eine Vielzahl von nur für den einzelnen Zweck vorgesehene Sondervorrichtungen erfordern. Darüber hinaus muß der Nutzer eine Vielzahl von Belegen, Karten und dgl. bereithalten und bei allen Nutzungen letztlich doch immer wieder Einzelschritte manuell abwickeln, wie beispielsweise das Entnehmen oder Ziehen eines Parkhausscheines, das Ausdrucken eines Fahrscheines und dergleichen. Darüber hinaus sind die meisten bekannten Systeme nicht in der Lage, auch vollautomatisch Folgemaßnahmen durchzuführen, wie beispielsweise eine sich an die Nutzung direkt anschließende automatisierte Abrechungsabwicklung.

Der vorliegenden Erfindung liegt daher die **Aufgabe** zugrunde, ein Verfahren der gattungsgemäßen Art bereitzustellen welches auf viele verschiedene Anwendungsbereiche einfach anpaßbar, automatisch und insbesondere nutzerseitig denkbar vereinfacht durchführbar ist.

Im Rahmen der Erfindung werden auch Vorrichtungen für den Einsatz im erfindungsgemäßen Verfahren angegeben.

Zur technischen **Lösung** wird mit der vorliegenden Erfindung vorgeschlagen ein Verfahren zur automatisierten Abwicklung von Verfügbarkeitsprüfungs-, Reservierungs- und Zuordnungsvorgängen in bezug auf örtlich festgelegte Waren- und/oder Dienstleistungsangebote, wobei unter Verwendung einer überregionalen Kommunikationsverbindung vor dem Hintergrund eines nutzerseitigen Bedarfs
a) eine nutzerseitige Festlegung auf ein anbieterseitiges Angebot erfolgt,
b) anbieterseitig dem Angebot eine berechtigende Kennung zugeordnet, an den Nutzer übertragen und in einer nutzerseitigen Speichereinheit gespeichert wird,
c) anbieterseitig eine Reservierung unter Speicherung der Kennung und Bereitstellung der Reservierungs- und Kennungsinformationen an ein Kennungsprüfungssystem durchgeführt werden,
und wobei unter Nutzung einer Nahbereichs-Kommunikationsverbindung
d) bei Eintritt des Nutzers in den Nahbereich des Kennungsprüfungssystems eine berührungslose Kennungsüberprüfung und
e) bei positivem Kennungsüberprüfungsergebnis eine Zugangsfreigabe für den Nutzer erfolgen.

Im Sinne der vorliegenden Erfindung umfaßt die Bezeichnung überregionale Kommunikationsverbindung jegliches realisierte oder denkbare Kommunikationssystem, welches vorzugsweise für die digitale Informationsübermittlung über weite Entfernungen geeignet ist. Dabei sind derzeit beispielsweise Mobilfunksysteme und dgl. verwendbar. Insbesondere findet die überregionale Kommunikation zwischen Nutzer und Anbieter unter Verwendung mobiler Kommunikationsendgeräte statt, beispielsweise über Handys, Palmtops und dergleichen. Zumindest nutzerseitig ist die Verwendung mobiler Kommunikationsendgeräte ein wesentlicher Aspekt zur Vereinfachung der Nutzung des Systems, denn der Nutzer kann praktisch aus dem gesamten Bereich Zugriff auf örtlich festgelegte Waren- und/oder Dienstleistungsangebote nehmen.

Unter örtlich festgelegte Waren- und/oder Dienstleistungsangeboten ist im Sinne der Erfindung zu verstehen, daß es sich um Waren handelt, die an vorgegebenen Orten oder an einer bestimmten Art von Orten im Empfang genommen werden können bzw. daß es sich um Dienstleistungen handelt, die an vorgegebenen Orten oder einer bestimmten Art von Orten genutzt werden können. So können Waren an mehreren Ausgabestellen zur Ausgabe bereitgestellt sein oder die Dienstleistungen verfügbar gemacht werden. Beispielsweise kann die überregionale Anforderung einer Fahrtberechtigung an verschiedenen Einstiegsstellen eingelöst werden.

Die Anforderung einer Ware oder Dienstleistung kann auf der Basis einer nutzerseitigen Bedarfsanzeige erfolgen oder aufgrund der Auswahl allgemein ausgegebener Angebote. Hat ein Nutzer einen konkreten Bedarf, wünscht er beispielsweise eine Bahnfahrt, wird er von sich aus das entsprechende System anwählen und mit diesem zum Zwecke der Abwicklung in Kommunikation treten, so daß im Rahmen der Erfindung die verfahrensgemäße Anwendung aufgrund eines nutzerseitigen Anstoßes erfolgt. Umgekehrt kann aber auch anbieterseitig ein Angebot verfügbarer Waren oder Dienstleistungen ausgegeben werden, so daß Kunden sich über das bestehende Angebot orientieren und wunschgemäß auswählen können. Eine Indeckungsbringung von Bedarf und Angebot kann auch einen Abgleich erfassen, der mehrere Kommunikationsschritte umfaßt. So kann könnenbeispielsweise bei Anwendung des Verfahrens im Personenverkehr nutzerseitig Start- und Zielort mit anbieterseitigen Angeboten abgeglichen werden.

Nachdem nutzerseitig ein Nutzungsinteresse über das überregionale Kommunikationssystem mitgeteilt wurde, wobei alle Übermittlungsarten denkbar sind wie beispielsweise Übermittlung digitaler Werte unter Nutzung eines GPS/SMS-Systems, GPRS, UMTS, des Internets, beispielsweise sogenannte WAP-Verbindungen, oder dgl., aber auch die Übermittlung sogenannter Voice-Mails, die z. B. im anbieterseitigen Rechnersystem digitalisiert und analysiert werden, erfolgt anbieterseitig anhand von Datenbanken oder datenbankähnlichen Bestandsübersichten eine Verfügbarkeitsprüfung. So kann beispielsweise in einem Parkhaus unter Nutzung örtlicher Überwachungssysteme das Vorhandensein eines freien Parkplatzes überprüft werden oder es wird eine Datenbanksimulation vorhandener Kapazitäten geführt und ausgewertet. Sofern die nachgefragte Ware oder Dienstleistung verfügbar ist, kann anbieterseitig die Anfrage abgedeckt werden. Die Abdeckbarkeitsprüfung anbieterseitig kann entfallen, wenn es sich um nicht vereinzelte Angebote handelt, beispielsweise allgemeine Fahrtberechtigungen im Personennahverkehr und dergleichen.

Bei der nutzerseitigen Festlegung auf ein Angebot wird anbieterseitig für dieses Angebot eine Reservierung durchgeführt, indem die Gesamtberechtigung zusammengefaßt und mit einer nutzerseitigen Coderierung, Kennung genannt, versehen wird, welche nutzerseitig gespeichert und mittels Fernübertragung dem nutzerseitigen Endgerät übermittelt wird. Diese Kennung ist dann überprüfbar der Berechtigung zugeordnet.

Die Kennung kann auf unterschiedliche Weise generiert werden. Gemäß einem Vorschlag der Erfindung kann die Kennung manuell erzeugt werden, in dem nutzerseitig eine Tastenkombination eingegeben wird. Diese kann in vorteilhafter Weise zugleich auch im Mobilfunkgerät des Nutzers zu späteren Erinnerungszwecken oder Wiederholbarkeitszwecken hinterlegt werden. Auch können automatisch Kennungen erzeugt oder aus einem Speicher entnommen und übertragen werden. Beispielsweise können die Mobilfunk-ID, die Telefonnummer, Telefonmerkmale wie beispielsweise Seriennummer, oder sonstige das Gerät identifizieren und elektronisch im Gerät abfragbare Daten verwendet werden, beispielsweise Daten der Telefonkarte, PIN, oder Daten im endgeräteseitigen Telefonnotizbuch.

Anbieterseitig wird die dem Nutzer zugeordnete Kennung gespeichert und einer Vorrichtung zugeführt, die geeignet ist, berührungslos, d. h. drahtlos, mit einer nutzerseitigen Einheit zu kommunizieren, um die dort hinterlegte Kennung zu erfassen und mit der gespeicherten Kennung zu vergleichen oder die erfaßte Kennung zu einer Vergleichsprüfung weiterzuleiten.

Das Kennungssystem umfaßt nutzerseitig eine Einheit, in welche ein ausschließlich dem Nutzer zugeordnete, diesen also individualisierende Kennung hinterlegt ist. Diese Einheit ist in der Lage, die Kennung zu einer berührungslosen Abfrage bereitzustellen, und zwar vorzugsweise sowohl dem nutzerseitigen überregionalen Kommunikationssystem als auch dem anbieterseitigen Kennungsprüfsystem. Die Kennung kann ein Digitalcode sein, der über unterschiedliche digitale Übermittlungsmedien berührungslos übertragbar ist, beispielsweise über Digitalfunksystem, optische System und dergleichen. Funktional entspricht diese Kennung einen digitalen Fahrausweis, Parkausweis oder dergleichen

Sofern ein Nutzer in den Nahbereich einer anbieterseitigen Prüfeinheit gelangt, kann die Kennungsüberprüfung eingeleitet werden. Unter Nahbereich wird im Sinne der Erfindung ein Kurzdistanzbereich um die Prüfeinheit verstanden, welche die Prüfeinheit in die Lage versetzt, mit der nutzerseitigen Kennungseinheit zu kommunizieren.

Innerhalb des Nahbereiches findet zwischen dem Kennungsprüfsystem und dem Nutzer eine Kommunikation unter Nutzung einer Nahbereichs-kommunikationsverbindung statt. Derartige Nahbereichskommunikationsverbindungen können Nahfunkstreckensysteme, optische Kommunikationssystem und dgl. sein. Nahfunkstreckensysteme sind beispielsweise als Ergänzung zu Mobilfunksystemen einsetzbar, sogenannte Blue Tooth. Optische Systeme können Infrarotschnittstellen und dgl. sein. Je nach Anwendungsfall können unterschiedliche Nahbereichskommunikationsysteme erforderlich sein, um bedarfsgerecht auf andere Weise nutzbar zu sein. Nahbereichskommunikationsverbindungen können auch durch den Aufbau und die Nutzung von Mobilfunkverbindungen realisiert werden.

Nachdem aufgrund der Nahbereichskommunikation das anbieterseitige System in der Lage ist, eine Kennungsüberprüfung durchzuführen, kann die Nutzungsfreigabe bzw. die Zugangsfreigabe erfolgen. So können beispielsweise Parkhausschranken geöffnet, Warenausgabesysteme aktiviert oder Zugangsbereiche für den Nutzer geöffnet werden. Auch können hinterlegte Berechtigungen überprüft werden, beispielsweise kann automatisch festgestellt werden, ob die der Kennung zugeordnete Person berechtigt ist, an einem bestimmten Flug teilzunehmen, eine bestimmte Ware zu empfangen oder dergleichen.

Durch das erfindungsgemäße Verfahren wird eine Zuordnung von einer Reservierung zu einer kennungsartigen Codierung vorgenommen. Diese Kennung wird ausschließlich dem Nutzer übermittelt, so daß nur der Nutzer berechtigt ist, das Angebot einzulösen, indem er die bei ihm gespeicherte Kennung vor Einlösung abgibt. Man spricht von einem sogenannten "Ticketing"-System.

Aufgrund der individualisierenden Zuordnung von Nutzerperson und Kennung kann das erfindungsgemäße System auf einfache Weise um ein automatisches Abrechungssystem ergänzt werden. Über die individualisierende Zuordnung läßt sich das Verfahren koppeln mit Kreditkartensystemen, zentralen Abrechnungssystemen, beispielsweise dem zentralisierten Abrechnungssystem der Mobilfunkanbieter, einem Fakturierungsystem durch Nutzung hinterlegter Rechnungsstellungsinformationen, oder auch mit anbieterseitig geführten und auf Nutzer bezogene Guthabensystemen.

Die Anwendungsbreite des erfindungsgemäßen Verfahrens ist äußerst vielseitig und praktisch unerschöpflich. Beispiele sind die Anwendungen in Parkhaussystemen, für die Kraftstoffausgabe an Tankstellen, Zugangsberechtigungsanlagen, Anwendungen im Personennahverkehr und Personenfernverkehr einschließlich der Anwendung auf Flugzeuge, Fähren und dergleichen, Anwendungen in Freizeitanlagen aber auch Anwendungen im Hardwarebereich, beispielsweise Drive-In-Abholsystem für Nahrungsmittel, insbesondere Fast-Food, aber auch sonstige Hardware. So ist sogar denkbar, Ausgabestellen in Warenlagerhäusern mit über Datenfernübertragung bestellten Waren zu bestücken und aufgrund eines über Nahbereichskommunikation übermittelten Berechtigungscode freizugeben.

Das System ist auch dauernutzerfähig, indem die der Kennung zugeordnete Berechtigung anbieterseitig festgehalten wird, so daß der Nutzer nicht jedes Mal eine neue Kennung abfragen muß. Dies ist besonders vorteilhaft bei Zugangsberechtigungsystemen oder der häufigen Nutzung von Freizeitanlagen, beispielsweise Schwimm- oder Saunabereichen oder der regelmäßigen Nutzung gleicher Nahverkehrsmittel.

Eine Besonderheit der vorliegenden Erfindung im Anwendungsbereich des Personenverkehrs ergibt sich dadurch, daß in Zügen Transaktionsdaten gesammelt werden können, die an bestimmten dafür vorgesehenen Stellen, beispielsweise im Bahnhofsbereich, gesammelt übertragen werden. So können beispielsweise Einstiegs- und Ausstiegsinformationen in bezug auf bestimmte Berechtigungen oder Kennungen im Zug erfaßt und gesammelt, beispielsweise für nachträgliche Abrechnungszwecke oder auch nur für statistische Zwecke übermittelt werden.

Eine Konkretisierung des erfindungsgemäßen Verfahrens sowie vorrichtungsseitige Merkmale der Erfindung ergeben sich aus der folgenden Beschreibung eines Anwendungsbeispiels, anhand der Figuren. Dabei zeigt:

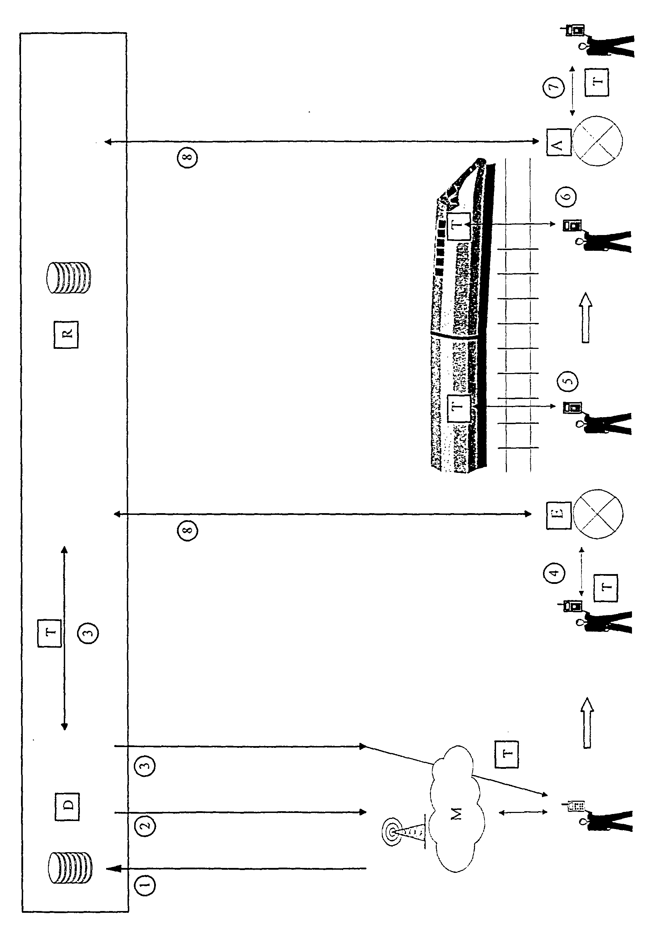

- Fig. 1: eine schematische Darstellung eines Ausführungsbeispiels der Erfindung.

Das Anwendungsbeispiel betrifft die Nutzung des erfindungsgemäßen Verfahrens im Nahverkehrsbereich für die Personenbeförderung.

Das Ausgangsszenario kann sich sehr unterschiedlich gestalten. Der Nutzer kann sich die Fahrtberechtigung von einem völlig anderen Bereich aus vorausschauend oder direkt vor Fahrtantritt reservieren wollen. Über ein mobilfunkfähiges Handy tritt der Nutzer in Kommunikation mit dem Anbieter und wählt Ausgangs- und Zielort aus und legt sich auf eine entsprechende Buchung 1, 2 fest. Im einfachsten Fall handelt es sich um eine Fahrtberechtigung von A nach B innerhalb eines bestimmten Zeitraumes, in komplizierten Fällen kann es sich aber auch um mehrfache Anschlußverbindungen in entsprechend zeitlichen Abläufen handeln. Sobald das zur Nutzung beabsichtigte Angebot feststeht, übermittelt der Nutzer ein entsprechendes Signal zur Festlegung und der Anbieter stellt das Berechtigungspaket zusammen und vergibt einen entsprechenden Kennungscode T. Dabei können auch für die verschiedenen Berechtigungsabschnitte verschiedene Codes vergeben werden. Der Anbieter speichert die Kombination von Nutzung und Kennung und übermittelt wenigstens die Kennung T an den Nutzer, Vorgang 3, bei welchem im Kommunikationsendgerät die empfangene Kennung gespeichert wird.

Verfahrensgemäß kann vorgesehen sein, daß der Nutzer zusätzlich Weginformationen erhält. Ist beispielsweise der konkrete Ort des Nutzers bekannt, so kann von dem anbieterseitigen Rechner die Zufahrtsinformation übermittelt werden. Der nutzerseitige Ort kann sich aus verschiedenen Quellen ergeben. Beispielsweise kann das nutzerseitige System GPS-fähig sein, oder der Mobilfunkbetreiber, der üblicherweise bis auf sehr kurze Distanzen sehr genau den Quellort des Mobilfunkendgerätes kennt, stellt die Ortsinformation zur Verfügung. Aufgrund des Nutzerortes und des Zielortes kann nun mittels eines Rechners unter Einbeziehung der infrastrukturellen Gegebenheiten und ggf. sogar unter Einbeziehung aktueller Verkehrsinformationen, Baustelleninformationen und dgl. ein Weg zum Zielort ermittelt und dem Nutzer übertragen werden. Nutzerseitig erfolgt die Darstellung des Weges über Zeigersymbole, nutzerseitige Kartensysteme, in graphischer Darstellung oder dergleichen.

Gelangt nun der Nutzer in den Nahbereich, im Falle der Personenbeförderung dem Ausgangsort, begibt er sich dort in einen Nahbereich zu einem anbieterseitigen kommunikationsfähigen Berechtigungsprüfungsgerät E. Es ist auch möglich, dieses Gerät beispielsweise in einem Zug, einem Bus, Vorgang 5, 6, oder im Ausgangsbereich A von Bahnhöfen zu positionieren, Vorgang 7. Unter Verwendung einer für den Nahbereich ausgelegten Kommunikationsschnittstelle, einem Blue Tooth, einer Infrarotschnittstelle oder dgl., übermittelt der Nutzer die erforderliche Kennung T an die anbieterseitige Vorrichtung E, so daß damit automatisch seine Berechtigung überprüft wird, Vorgang 4.

Bei dem erfindungsgemäßen Ticketing-Verfahren wird eine Kennung einem Berechtigungspaket zugeordnet, was am Beispiel einer Fahrtberechtigung erläutert wurde. Dabei kann es sich auch um eine Dauerfahrtberechtigung handeln im Sinne einer Monatskarte, oder um gänzlich andere Nutzungsarten wie reine Eintritts- oder Zugangsberechtigungen usw.

Das gezeigte Ausführungsbeispiels umfaßt auch die Möglichkeit der Erfassung bzw. Übermittlung von Anwesenheits-/Bewegungsdaten 8, die in einem entsprechenden Abgleichvorgang, beispielsweise im Bahnhofsbereich, gesammelt übermittelt werden.

Das beschriebene Anwendungsbeispiel dient nur der Erläuterung und ist nicht beschränkend. Die vorrichtungsseitigen Merkmale beschreiben einerseits ein anbieterseitiges System, welches separiert oder integriert datenfernübertragungsfähig im überregionalen Bereich einerseits und im Nahbereich andererseits ist. Weiterhin bedarf es anbieterseitig eines Rechnersystems, welches zentrale Aufgaben wie Verfügbarkeitsüberprüfung und ggf. Abrechnung und dgl. durchführen kann, andererseits dezentrale Maßnahmen wie Berechtigungsüberprüfungen und dergleichen realisieren kann. Nutzerseitig ist ein Kommunikationsendgerät für die überregionale Datenfernübertragung sowie eine Einheit zur berührungslosen Nahbereichskommunikation erforderlich, um Berechtigungsüberprüfungen realisierbar zu machen.

### Bezugszeichenliste

- 1,2: nutzerseitige Festlegung auf anbieterseitiges Angebot
- 3: Übertragung einer Kennung / eines elektronischen Tickets
- 4: Prüfung der Zugangsberechtigung (optional)
- 5: Anwesnheitsregistrierung/Ticketkontrolle im Zug (optional)
- 6: Ausgangskontrolle (optional)
- 7: Ausstriegsregistrierung im Zug (optional)
- 8: Erfassung/Übermittlung von Anwesenheits-/Bewegungsdaten (optional)
- T: Kennung/elektronisches Ticket
- M: Mobilfunk-Netz
- E: Eingang/Zugangskontrolle (optional)
- A: Ausgang/Ausgangskontrolle (optinal)
- D: Angebots-/Dienstleistungsverzeichnis
- R: Reservierung (optional)

## Patentansprüche

1. Verfahren zur automatisierten Abwicklung von Verfügbarkeitsprüfungs-, Reservierungs- und Zuordnungsvorgängen in bezug auf örtlich festgelegte Waren- und/oder Dienstleistungsangebote, wobei unter Verwendung einer überregionalen Kommunikationsverbindung vor dem Hintergrund eines nutzerseitigen Bedarfs
a) eine nutzerseitige Festlegung auf ein anbieterseitiges Angebot erfolgt,
b) anbieterseitig dem Angebot eine berechtigende Kennung zugeordnet, an den Nutzer übertragen und in einer nutzerseitigen Speichereinheit gespeichert wird,
c) anbieterseitig eine Reservierung unter Speicherung der Kennung und Bereitstellung der Reservierungs- und Kennungsinformationen an ein Kennungsprüfungssystem durchgeführt werden,
und wobei unter Nutzung einer Nahbereichs-Kommunikationsverbindung
d) bei Eintritt des Nutzers in den Nahbereich des Kennungsprüfungssystems eine berührungslose Kennungsüberprüfung und
e) bei positivem Kennungsüberprüfungsergebnis eine Zugangsfreigabe für den Nutzer erfolgen.

2. Verfahren nach Anspruch 1, dadurch gekennzeichnet, daß als überregionale Kommunikationsverbindung ein Mobilfunknetzsystem verwendet wird.

3. Verfahren nach einem der vorhergehenden Ansprüche, dadurch gekennzeichnet, daß als Nahbereichs-Kommunikationsverbindung ein Mobilfunknetzsystem verwendet wird.

4. Verfahren nach einem der vorhergehenden Ansprüche, dadurch gekennzeichnet, daß als Nahbereichs-Kommunikationsverbindung eine Nahbereichsfunkstrecke verwendet wird.

5. Verfahren nach einem der vorhergehenden Ansprüche, dadurch gekennzeichnet, daß die Kennung für einen Nutzungsvorgang mit räumlich oder zeitlich begrenzter Gültigkeit erteilt wird.

6. Verfahren nach einem der vorhergehenden Ansprüche, dadurch gekennzeichnet, daß die Nahbereichskommunikation nutzerseitig aktiviert wird.

7. Verfahren nach einem der vorhergehenden Ansprüche, dadurch gekennzeichnet, daß die berührungslose Kennungsüberprüfung optisch erfolgt.

8. Verfahren nach einem der vorhergehenden Ansprüche, dadurch gekennzeichnet, daß die nutzerseitige Kennungsabgabe zu Übermittlungs- und/oder Überprüfungszwecken aufgrund besonderer Aktivierung erfolgt.

9. Verfahren nach einem der vorhergehenden Ansprüche, dadurch gekennzeichnet, daß die Abwicklung der Kommunikation, der Verfügbarkeitsprüfung, der Reservierung und Zuordnung mittels einer Zentralrechneranlage durchgeführt wird.

10. Verfahren nach Anspruch 9, dadurch gekennzeichnet, daß die Zentralrechneranlage über Datenfernübertragungsschnittstellen sowie Systeme für die Anfrageanalyse, die Abdeckbarkeitsprüfung, die Angebotserstellung und-übermittlung sowie eine Einheit zur Vergabe und Übertragung einer berechtigenden Kennung, die Kommunikation mit Kennzeichnungsprüfungs- und/oder Zugangsfreigabesystemen sowie ggf. Bereitstellungseinheiten verfügt.

11. Verfahren nach einem der vorhergehenden Ansprüche, dadurch gekennzeichnet, daß dieses als Fahrberechtigungssystem für den Personenverkehr verwendet wird.

12. Verfahren nach einem der vorhergehenden Ansprüche, dadurch gekennzeichnet, daß mit diesem nach erfolgter Nutzung unter Verwendung der Kennung und der Informationen über die durchgeführte Nutzung eine automatische Abrechungsabwicklung durchgeführt wird.
